(19) Europäisches Patentamt
European Patent Office
Office européen des brevets

(11) EP 3 105 644 B1

(12) EUROPEAN PATENT SPECIFICATION

(45) Date of publication and mention
of the grant of the patent:
**19.09.2018 Bulletin 2018/38**

(51) Int Cl.:
$G05B\ 23/02$ (2006.01)      $G07C\ 5/00$ (2006.01)
$G06N\ 7/00$ (2006.01)

(21) Application number: **15703278.0**

(22) Date of filing: **06.02.2015**

(86) International application number:
**PCT/EP2015/052559**

(87) International publication number:
**WO 2015/121176 (20.08.2015 Gazette 2015/33)**

## (54) METHOD OF IDENTIFYING ANOMALIES

VERFAHREN ZUR IDENTIFIZIERUNG VON ANOMALIEN

PROCÉDÉ D'IDENTIFICATION D'ANOMALIES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.02.2014 GB 201402343**

(43) Date of publication of application:
**21.12.2016 Bulletin 2016/51**

(73) Proprietor: **GE Aviation Systems Limited
Bishops Cleeve
Cheltenham
Gloucestershire GL52 8SF (GB)**

(72) Inventors:
• **GREEN, Donna Louise
Eastleigh
Hampshire SO53 4YG (GB)**
• **LARDER, Brian David
Eastleigh
Hampshire SO53 4YG (GB)**
• **KNIGHT, Peter Robin
Eastleigh
Hampshire SO53 4YG (GB)**
• **THUONG, Olivier
Eastleigh
Hampshire SO53 4YG (GB)**

(74) Representative: **Williams, Andrew Richard et al
GE International Inc.
GPO-Europe
The Ark
201 Talgarth Road
Hammersmith
London W6 8BJ (GB)**

(56) References cited:
FR-A1- 2 871 949      US-A1- 2004 002 776
US-A1- 2008 086 283      US-A1- 2013 116 996
US-A1- 2013 197 854

## Description

### BACKGROUND

Contemporary aircraft include gas turbine engine systems for use within the aircraft. Currently, airlines and maintenance personnel perform routine maintenance on the engine systems to replace parts that exceed their life limits and to inspect parts for defects or failures. Additionally, data collection systems may gather information from the engine systems to identify faults. The gathered information may inform the pilot of events such as temperature being too high or oil levels being too low. In this way, based on pilot discretion, fault occurrences may be recorded manually.

US 2013/116996 describes a method for integrating function models of a health management system for a vehicle having multiple systems connected to a communications network.

### BRIEF DESCRIPTION

One aspect of the invention relates to a method of identifying anomalies in a monitored system. The method comprises acquiring input data from a plurality of sensors in the monitored system; preprocessing the acquired data to prepare it for modeling, and leaving a first data subset. The first data subset is fed into a normal Gaussian mixture model built using normal operating conditions of the monitored system, and data flagged as anomalous by the normal Gaussian mixture model is removed, leaving a second data subset. The second data subset is compared to at least one threshold. If the comparison indicates that the second data subset contains anomalies, then the second data subset is fed into one or more sets of asset performance Gaussian mixture models, the asset performance Gaussian mixture models include an operating condition Gaussian mixture model built using data affected by operating conditions of the monitored system, and a non-operating condition Gaussian mixture model built using data not affected by operating conditions of the monitored system. The method identifies which data contribute to an abnormality in the monitored system, leaving a third data subset. The method post-processes the third data subset to extract anomalies in the monitored system.

### BRIEF DESCRIPTION OF THE DRAWINGS

In the drawings:

FIG. 1 is a flowchart showing a method of identifying anomalous data according to an embodiment of the invention.
FIG. 2 is a flowchart showing a method of diagnosing a fault causing anomalous data according to an embodiment of the invention.

## DETAILED DESCRIPTION

In the background and the following description, for the purposes of explanation, numerous specific details are set forth in order to provide a thorough understanding of the technology described herein. It will be evident to one skilled in the art, however, that the exemplary embodiments may be practiced without these specific details. In other instances, structures and devices are shown in diagram form in order to facilitate description of the exemplary embodiments.

The exemplary embodiments are described with reference to the drawings. These drawings illustrate certain details of specific embodiments that implement a module, method, or computer program product described herein. However, the drawings should not be construed as imposing any limitations that may be present in the drawings. The method and computer program product may be provided on any machine-readable media for accomplishing their operations. The embodiments may be implemented using an existing computer processor, or by a special purpose computer processor incorporated for this or another purpose, or by a hardwired system.

As noted above, embodiments described herein may include a computer program product comprising machine-readable media for carrying or having machine-executable instructions or data structures stored thereon. Such machine-readable media can be any available media, which can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium that can be used to carry or store desired program code in the form of machine-executable instructions or data structures and that can be accessed by a general purpose or special purpose computer or other machine with a processor. When information is transferred or provided over a network or another communication connection (either hardwired, wireless, or a combination of hardwired or wireless) to a machine, the machine properly views the connection as a machine-readable medium. Thus, any such a connection is properly termed a machine-readable medium. Combinations of the above are also included within the scope of machine-readable media. Machine-executable instructions comprise, for example, instructions and data, which cause a general purpose computer, special purpose computer, or special purpose processing machines to perform a certain function or group of functions.

Embodiments will be described in the general context of method steps that may be implemented in one embodiment by a program product including machine-executable instructions, such as program codes, for example, in the form of program modules executed by machines in networked environments. Generally, program modules include routines, programs, objects, components, data structures, etc. that have the technical effect of performing particular tasks or implement particular abstract data types. Machine-executable instructions, associated data structures, and program modules represent examples of program codes for executing steps of the method disclosed herein. The particular sequence of such executable instructions or associated data structures represent examples of corresponding acts for implementing the functions described in such steps.

Embodiments may be practiced in a networked environment using logical connections to one or more remote computers having processors. Logical connections may include a local area network (LAN) and a wide area network (WAN) that are presented here by way of example and not limitation. Such networking environments are commonplace in office-wide or enterprise-wide computer networks, intranets and the internet and may use a wide variety of different communication protocols. Those skilled in the art will appreciate that such network computing environments will typically encompass many types of computer system configurations, including personal computers, hand-held devices, multiprocessor systems, microprocessor-based or programmable consumer electronics, network PCs, minicomputers, mainframe computers, and the like.

Embodiments may also be practiced in distributed computing environments where tasks are performed by local and remote processing devices that are linked (either by hardwired links, wireless links, or by a combination of hardwired or wireless links) through a communication network. In a distributed computing environment, program modules may be located in both local and remote memory storage devices.

An exemplary system for implementing the overall or portions of the exemplary embodiments might include a general purpose computing device in the form of a computer, including a processing unit, a system memory, and a system bus, that couples various system components including the system memory to the processing unit. The system memory may include read only memory (ROM) and random access memory (RAM). The computer may also include a magnetic hard disk drive for reading from and writing to a magnetic hard disk, a magnetic disk drive for reading from or writing to a removable magnetic disk, and an optical disk drive for reading from or writing to a removable optical disk such as a CD-ROM or other optical media. The drives and their associated machine-readable media provide nonvolatile storage of machine-executable instructions, data structures, program modules and other data for the computer.

Beneficial effects of the method disclosed in the embodiments include the early detection of abnormal system behavior applicable to assets that may include multiple complex systems. Consequently, implementation of the method disclosed in the embodiments may reduce repair and maintenance costs associated with the management of a fleet of assets. The inspection and repairs of assets with anomalous system behavior may occur before further damage to the asset and may allow for efficient fleet maintenance by increasing lead-time for scheduling repair and maintenance activities. The method may also provide an indication of what or where the fault is; resulting in an inspection that may be directed at the most likely source of the fault. Rather than having to inspect the complete asset, maintenance plans may be focused and save time.

The objective of anomaly detection is to identify abnormal system behaviour that might be indicative of a fault in the monitored system. Anomaly detection may be used in applications where there is no large library of tagged or labelled fault data with which to train a model. Anomaly detection may include building a model of normal behaviour using a training data set and then assessing new data based on computing a fit between the new data and the model. If the fit is not within a threshold of the model, the data is flagged as anomalous. The modelling approach typically requires that a set of normal data is available to construct a model of normal behaviour. However, modelling with in-service data (that is, collecting data to be used as both test and training data) may require additional processing to prevent corruption of the model by anomalous training data. For example, with a fleet of aircraft assets, due to issues such as a lack of feedback from the repair and overhaul process, undetected instrumentation problems, maintenance interventions, etc., any database of historical in-service data may contain data with unknown anomalies.

Anomaly models are built from a set of input data, with input parameters selected according to the particular monitoring requirements for the model. The anomaly models are based on Gaussian mixture models and provide detailed density mapping of the data. Gaussian mixture models allow complex distributions to be modelled by summing a number of Gaussian distributions. A Gaussian distribution $d(x)$ may be described by:

$$d(x) = \frac{1}{\sqrt{2\pi\sigma^2}} e^{-\frac{(x-\mu)^2}{2\sigma^2}}$$

where $\mu$ is the mean (i.e. location of the peak) and $\sigma$ is the variance (i.e. the measure of the width of the distribution). Multiple Gaussian distributions may then be summed as in:

$$f(x) = \sum_{i=1}^{n} w_i d_i(x)$$

each with a weight $w$ corresponding to the number of samples represented by that distribution. In multi-dimensional problems, the individual distributions are often called clusters since they represent a subset of the data in terms of density distribution. The clusters in a model can rotate to represent correlations between parameters. The rotation is defined by a cluster covariance matrix. The models may then be adapted to reject any abnormalities existing in the training data. Automatic model adaptation detects regions in the cluster space that are not representative of normal behaviour and then removes these clusters. The adaptation process is complex but is controlled by a simple tuning parameter that specifies the percentage of the data to be removed (typically about 5%). The final model provides a poor fit to samples in the training data that are outliers. The automated model adaptation process enables the building of models using in-service data that contains various unknown anomalies.

The resulting models are sophisticated statistical representations of the data generated from in-service experience; fusing sets of input parameters to reduce a complex data set into a single parameter time-history, called a log likelihood or fitness score trace. The fitness score measures the degree of abnormality in the input data and mirrors the shape of any significant data trends. The fitness score represents a goodness of fit criterion, indicating how well data fits a model of normality. Therefore, the fitness score has a decreasing trend as data becomes increasingly abnormal.

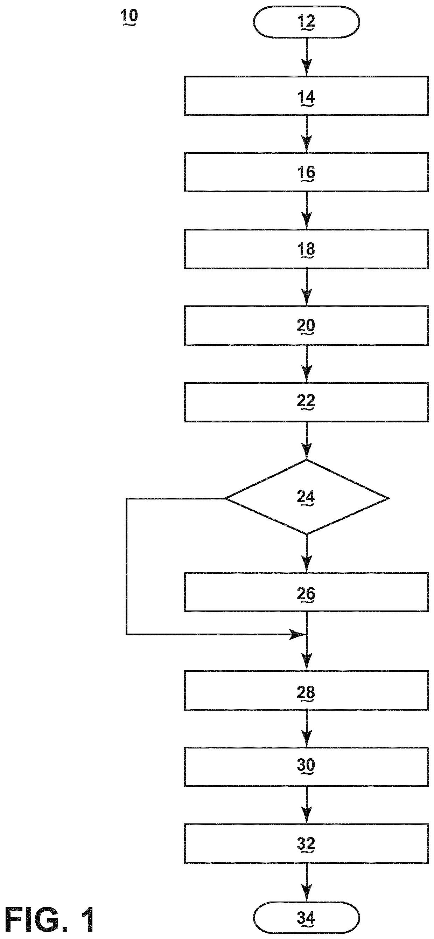

FIG. 1 is a flowchart showing a method 10 of identifying anomalous data according to an embodiment of the invention. Initially, a monitoring system, such as an off-line computer diagnostics system, integrated with the method 10 acquires input data 12 from one or more sensors of a monitored system. The input data may be, for example, sensor data from an aircraft engine system, though sensors and corresponding sensor data relating to other monitored aircraft systems including avionics, power and mechanical systems may be used. While described below in the context of aircraft systems, the method 10 of identifying anomalous data is more generally applicable to machine health management, human health management, data exploration, decision support tasks, etc. That is, any system integrated with sensors capable of generating data affected by faults of that system may be monitored per an embodiment of the monitoring system.

A processor of the monitoring system may then take steps to preprocess the acquired data to prepare the data for modeling. The preprocessing steps may include deriving parameters 14 from the acquired data. For example, data from temperature sensors may be averaged to determine an average temperature parameter. Alternatively, the processor may compare data from different sensors. For example, the processor may calculate the divergence between engine exhaust temperature sensors for two different engines for use as a parameter. An additional preprocessing step may include a step of normalization 16. The step of normalization 16 may apply to the acquired data, the derived parameters or both. For example, temperature, pressure, spool speed and flow rate data may be corrected to international standard atmosphere (ISA) conditions.

Subsequent to the preprocessing of the acquired data, the processor may then extract features 18 from the data, the derived parameters and/or the normalized data. For example, trends in the data may be identified and removed by subtracting the median of a selected window of the data. The processor may employ other signal processing techniques to minimize or remove outliers or otherwise smooth the data resulting in a first data subset prepared for a step of modeling.

The processor may then, at step 20, feed the first data subset into a Gaussian mixture model built using normal operating conditions of the monitored system. For example, a model built upon the normal operating conditions of an aircraft engine may include variables describing aircraft altitude and speed along with the air temperature. By modeling the first data subset with a model based on normal operating conditions of the system, the processor may build a filter that may be used to identify or remove data collected during abnormal operating conditions of the monitored system. For example, the processor may flag data collected when the aircraft was flying at an unconventional altitude, speed or both. The Gaussian mixture model may be preferably formed as a normal Gaussian mixture model though other distributions may be contemplated. For example, the model may be formed as a bimodal Gaussian mixture model.

Based on the comparison of the first data subset and the model of the operating condition, the processor at step 22 may identify and flag data acquired during abnormal operating conditions. That is, when the data was collected during abnormal operating conditions, the first data subset may not present a good fit to the model of the normal operating condition. To determine whether the data presents a good fit to the model, the processor may compare the goodness of fit of the data to the model and one or more thresholds. The resulting data, including the data flagged as anomalous by comparison with the normal Gaussian mixture model, forms a second data subset.

The processor may then feed the second data subset into a set of asset performance models. The set of asset performance models may include models where the operating condition of the monitored system may affect the relationships between the values of the data parameters and models where the operating condition of the monitored system is irrelevant to the relationships between the values of the data parameters. The processor, at step 24, determines if the comparison at step 22 indicates that the second data subset contains anomalies in the operating condition of the monitored system. If so, then the processor at step 26 feeds the second data subset without the data points collected during the abnormal operating condition into at least one of a set of asset performance Gaussian mixture models. The asset performance Gaussian mixture models at step 26 include an operating condition Gaussian mixture model built using data affected by the operating conditions of the monitored system. The processor at step 28 feeds the second data subset into at least one of a set of asset performance Gaussian mixture models built using data not affected by operating conditions of the monitored system.

Based on the comparison of the second data subset and the set of asset performance models at steps 26 and 28, the processor may identify which data contribute to an abnormality in the monitored system, leaving a third data subset. That is, when the collected data was collected while an aspect of the monitored system is performing anomalously, the second data subset will not present a good fit to the model of the asset performance. As opposed to the output of the operating condition model at step 20 where the asset may be operating outside its normal mode of operation, the output of the asset performance models may indicate that the asset is operating within its normal mode of operation, but performing abnormally. The resulting data forms a third data subset.

Additional post-processing of the data may determine whether the data presents a good fit to the model by comparing the goodness of fit, based on the fitness score, of the data to the models and one or more thresholds at step 30. Further, the processor at step 32 may employ other signal processing techniques to minimize or remove outliers or otherwise smooth the data to better extract which data from the raw input data set is the anomalous data. The processor calculates residuals or measures of abnormality for the parameters (that is, the raw data from step 12) and the derived parameters (from step 14) to output, at step 34, a score of the overall measure of the monitored system and a measure of each parameter. In this way, the method of identifying anomalies 10 may determine an abnormally operating monitored system and an abnormally operating element in the monitored system. For example, one engine on an aircraft may be determined to be operating abnormally while the other three engines of the aircraft may be determined to be operating normally.

The processor may convert the anomaly model fitness score into a probability of anomaly measure, which is a normalized probability measure that ranges between zero and one. For each model, there is a probability of anomaly distribution which is an extreme value distribution. The processor may convert a fitness score value to the probability of distribution and determine a value indicative of the probability. Most fitness score values will result in a probability of anomaly of zero because most data will be normal. Because the probability of anomaly values range from zero to one, the probability of anomaly provides a measure that is normalized across models, enabling a comparison between model outputs. Consequently, such a normalized metric may be fed into a secondary process, such as automated reasoning, to determine the most likely fault that caused the anomaly.

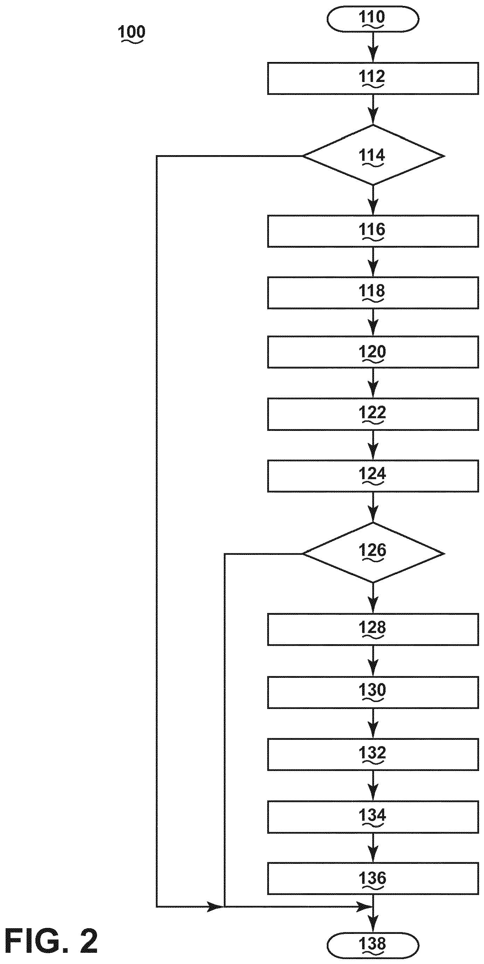

FIG. 2 is a flowchart showing a method of diagnosing a fault 100 causing anomalous data according to an embodiment of the invention. Initially, at step 110, the data (along with the score of the overall measure of the monitored system and a measure of each parameter output at step 34 in FIG. 1) is input to the processor of a monitoring system. The processor may perform a number of logical sensor checks at step 112 to determine if a faulty sensor caused the anomaly in the data. If the processor determines that a faulty sensor caused the anomaly in the data, then at step 114, the processor determines that no further processing of the data is necessary and proceeds to step 138 where the processor issues an alert identifying to a user that a sensor fault has occurred. For example, if the processor determines that a raw data value from a sensor, such as a temperature sensor reading 1000 degrees higher than normal, is outside a predefined limit or a built-in sensor test fails, the processor may identify the sensor to a user via an automatically generated email.

If the processor determines at step 114 that the anomalous data is not caused by a sensor fault, then the processor may feed the extracted anomalies through a set of probabilistic reasoning networks to diagnose the most likely cause of the detected anomaly. Probabilistic reasoning networks may include Bayesian networks and influence networks to classify the extracted anomalies according to fault type. Generally, probabilistic reasoning networks are a type of statistical model that represents a set of random variables and their conditional dependencies graphically. Via the probabilistic reasoning networks, the processor may determine the probabilities that an extracted anomaly is caused by a certain fault type. In this way, the processor may initiate a sequence of steps to determine the timing of a fault, that is, if the fault occurs instantaneously or progresses over a duration of time.

The processor may perform preprocessing operations at step 116 prior to feeding the extracted anomalies into the Bayesian and influence networks. The preprocessing operations at step 116 may include parameterization of the raw data. For example, the processor may compare absolute temperature measurements from one or more temperature sensors and form a parameter based on the comparison.

The processor may then feed the selected parameters into a multi-parameter step detection algorithm at step 118 to determine if a fault associated with the anomaly data occurred at a rate commensurate with that of the sample rate of the data. That is, values of the anomaly data increase (or decrease) by a substantial value across a sample duration during a step event. The multi-parameter step detection algorithm at step 118 characterizes the anomaly data by detecting a substantial rate of change of the values of one or more selected parameters of the anomaly data.

The processor may then feed the anomaly data into a step suppression model at step 120. The step suppression model at step 120 is a probabilistic reasoning network that may include hybrid Bayesian networks and influence networks. The step suppression model at step 120 represents a model where conditions or events may affect the monitored system to generate step responses that are not indicative of a fault in the monitored system. In other words, the step suppression model at step 120 models potential false alarms where anomaly data was not caused by a fault.

Based on the results of the step suppression model at step 120, the processor at step 122 may determine the parameters and timestamp for the detected step. The processor may then perform a step 124 of thresholding where the goodness of fit for the anomaly data and the step suppression model determine if a non-fault event occurred. If the processor determines that a non-fault event occurred at step 126, the processor determines that no further processing of the data is necessary and proceeds to step 138.

If, at step 126, the processor does not determine that a non-fault event occurred, then the processor may feed the anomaly data into a step fault model at step 128. The step fault model at step 128 is another probabilistic reasoning network that may include hybrid Bayesian networks and influence networks. The step fault model at step 128 represents a model where conditions or events may affect the monitored system to generate step responses that are indicative of a fault in the monitored system. Based on the results of the step fault model at step 128, the processor at step 130 may determine the parameters and timestamp for the detected fault.

For the remaining anomaly data that is not indicative of a step event, the processor may feed the anomaly data into a trend rate estimator at step 132 that determines the rate (over multiple samples of data) at which an extracted anomaly develops. The processor then feeds the extracted anomaly into a hybrid trend fault Bayesian network or influence network to determine the rate of the corresponding fault in the monitored system at step 134. Based on the results of the trend fault model at step 134, the processor at step 136 may determine the parameters, timestamp and duration for the detected fault.

While the above description describes three probability reasoning networks run in sequence for determining information relating to faults, additional probability reasoning networks may be implemented. Any probability reasoning networks that have been configured according to the method 100 to suppress other probability reasoning networks are run first, and then, depending on the results of the networks (i.e. whether the probabilities for an anomaly exceed a predetermined threshold), further networks may be run against the anomaly data. Each probability reasoning network is trained to output a probability of anomaly that the anomaly data input to the network was caused by a particular fault. The network builds its underlying model by a combination of learning from previous data characterizing the fault and *a priori* knowledge. For each fault network run, the processor will determine the probability that the anomalous data was caused by the fault modeled by the network.

Configurable thresholds are set based on the probabilities of anomaly and alerts are generated at step 138 that display the most likely faults. Alerts may also be generated where the data did not match any of the known faults. The alerts may deliver information generated by the feature extractors such as which parameters have significant steps or trends in them. For example, a summary email may be sent containing any engine serial numbers showing anomalous data on a particular day and which have either a high probability of being a fault or exhibit significant features that may have caused the anomaly, such as a step change in several parameters.

One benefit of the modelling process described in the methods above is that it does not require data to be categorized as either training data or test data. By storing subsets of data within the model, not all of data is used to build all aspects of the model. In this way, the data is split up into multiple training sets and models. Each training data set effectively acts as a test data set for the models for which the data set did not contribute during the build process. Consequently, all available historical data may contribute to a model, apart from the data sets that are known *a-priori* to be anomalous. Consequently, online model updates may be performed *in-situ* as new data are acquired.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method (10) of identifying anomalies in a monitored system, the method comprising:

   acquiring input data (12) from a plurality of sensors in the monitored system;
   preprocessing (14,16) the acquired data to prepare it for modeling, and leaving a first data subset;
   feeding (20) the first data subset into a normal Gaussian mixture model built using normal operating conditions of the monitored system, and identifying (22) data flagged as anomalous by the normal Gaussian mixture model, leaving a second data subset;
   comparing (22) the second data subset to at least one threshold;
   if the comparison indicates that the second data subset contains anomalies, then feeding (26,28) the second data subset into at least one of a set of asset performance Gaussian mixture models, and identifying which data contribute to an abnormality in the monitored system, leaving a third data subset; and

post-processing (30) the third data subset to extract anomalies in the monitored system; **characterized in that** the asset performance Gaussian mixture models include an operating condition Gaussian mixture model built using data affected by operating conditions of the monitored system, and a non-operating condition Gaussian mixture model built using data not affected by operating conditions of the monitored system.

2. The method (10) of claim 1, wherein the preprocessing step includes deriving (14) parameters from the acquired data.

3. The method (10) of either of claim 1 or 2, wherein the preprocessing step includes normalizing (16) the acquired data.

4. The method (10) of claim 3, further comprising extracting (18) features from the normalized data by subtracting the median of the normalized data over a selected window of data.

5. The method (10) of any preceding claim, wherein the comparing step (22) includes determining if the second data subset includes data affected by an operating condition, and if so, then feeding the second data subset into the operating condition Gaussian mixture model and then feeding the second data subset into the non-operating condition Gaussian mixture model, and if not, then feeding the second data subset into the non-operating condition Gaussian mixture model.

6. The method (10) of any preceding claim, wherein the post-processing step (30) includes comparing the third data subset to at least one threshold.

7. The method (10) of any preceding claim, wherein the post-processing step (30) includes at least one of removing outliers from or smoothing (32) the third data subset.

8. The method (10) of any preceding claim, further comprising checking sensors for the extracted anomalies to determine if a sensor is a source of an anomaly associated with the sensor.

9. The method (10) of any preceding claim, further comprising feeding at least one extracted anomaly through a step detection algorithm to identify timing of a fault due to the at least one extracted anomaly.

10. The method (10) of any preceding claim, further comprising feeding the extracted anomalies through a set of hybrid step fault Bayesian networks and influence networks to classify the extracted anomalies according to fault type, and determining the probabilities that a given extracted anomaly is caused by a given fault type.

11. The method (10) of claim 10, wherein the order in which the set of step fault hybrid Bayesian networks and influence networks are run is configured so that later networks can be suppressed based on earlier ones.

12. The method (10) of either of claim 10 or 11, further comprising comparing the given extracted anomaly to at least one threshold, and if the given extracted anomaly meets the at least one threshold, sending a message identifying and alerting the probability of a fault in the monitored system.

13. The method (10) of any of claims 10 to 12, further comprising feeding the extracted anomalies to a hybrid trend fault Bayesian network to determine a rate of a fault in the monitored system.

**Patentansprüche**

1. Verfahren (10) zur Identifizierung von Anomalien in einem überwachten System, wobei das Verfahren umfasst:

Erfassen von Eingangsdaten (12) von einer Vielzahl von Sensoren im überwachten System; Vorverarbeitung (14,16) der erfassten Daten, um sie für die Modellierung vorzubereiten, wobei eine erste Datenuntermenge verbleibt; Einspeisen (20) der ersten Datenuntermenge in ein normales Gauß'sches Mischmodell, das unter normalen Betriebsbedingungen des überwachten Systems gebildet wurde, und Identifizierung (22) von Daten, die durch das normale Gauß'sche Mischmodell als anomal gekennzeichnet wurden, wobei eine zweite Datenuntermenge verbleibt; Vergleichen (22) der zweiten Datenuntermenge mit mindestens einem Schwellenwert; falls der Vergleich anzeigt, dass die zweite Datenuntermenge Anomalien enthält, dann Einspeisen (26, 28) der zweiten Datenuntermenge in mindestens eine von einer Menge Gauß'scher Mischmodelle für Asset Performance, und Identifizierung, welche Daten zu einer Anomalie in dem überwachten System beitragen, wobei eine dritte Datenuntermenge verbleibt; und
Nachverarbeitung (30) der dritten Datenteilmenge, um Anomalien im überwachten System zu extrahieren;
**dadurch gekennzeichnet, dass** die Gauß'schen Mischmodelle für Asset Performance ein Gauß'sches Mischmodell für Betriebsbedingung umfassen, das unter Verwendung von Daten, die durch Betriebsbedingungen des überwachten Systems beeinflusst werden, und ein Gauß'sches Mischmodell für Nichtbetriebsbedingung, das unter Verwendung von Daten, die nicht durch Betriebsbedingungen des überwachten Systems beeinflusst werden, gebildet wird.

2. Verfahren (10) nach Anspruch 1, wobei der Vorverarbeitungsschritt die Ableitung (14) von Parametern aus den erfassten Daten umfasst.

3. Verfahren (10) nach Anspruch 1 oder 2, wobei der Vorverarbeitungsschritt das Normalisieren (16) der erfassten Daten umfasst.

4. Verfahren (10) nach Anspruch 3, umfassend weiter das Extrahieren (18) von Merkmalen aus den normalisierten Daten durch Subtrahieren des Medians der normalisierten Daten über ein ausgewähltes Datenfenster.

5. Verfahren (10) nach einem der vorstehenden Ansprüche, wobei der Vergleichsschritt (22) das Bestimmen umfasst, ob die zweite Datenuntermenge Daten enthält, die von einer Betriebsbedingung betroffen sind, und wenn ja, dann das Einspeisen der zweiten Datenuntermenge in das Gauß'sche Mischmodell für Betriebsbedingung und dann das Einspeisen der zweiten Datenuntermenge in das Gauß'sche Mischmodell für Nichtbetriebsbedingung, und wenn nicht, dann das Einspeisen der zweiten Datenuntermenge in das Gauß'sche Mischungsmodell für Nichtbetriebsbedingung.

6. Verfahren (10) nach einem der vorstehenden Ansprüche, wobei der Nachverarbeitungsschritt (30) den Vergleich der dritten Datenuntermenge mit mindestens einem Schwellenwert einschließt.

7. Verfahren (10) nach einem der vorstehenden Ansprüche, wobei der Nachverarbeitungsschritt (30) mindestens einen der folgenden Schritte umfasst: Entfernen von Ausreißern aus oder Glätten (32) der dritten Datenuntermenge.

8. Verfahren (10) nach einem der vorstehenden Ansprüche, weiter umfassend das Prüfen von Sensoren auf die extrahierten Anomalien, um festzustellen, ob ein Sensor eine Quelle einer mit dem Sensor assoziierten Anomalie ist.

9. Verfahren (10) nach einem der vorstehenden Ansprüche, weiter umfassend das Einspeisen mindestens einer extrahierten Anomalie durch einen Schrittdetektionsalgorithmus, um den Zeitpunkt eines Fehlers aufgrund der mindestens einen extrahierten Anomalie zu identifizieren.

10. Verfahren (10) nach einem der vorstehenden Ansprüche, weiter umfassend das Einspeisen der extrahierten Anomalien durch eine Menge von Bayes'schen Netzen für Hybridschrittfehler und Einflussnetzen, um die extrahierten Anomalien nach Fehlertyp zu klassifizieren, und das Bestimmen der Wahrscheinlichkeiten, dass eine gegebene extrahierte Anomalie durch einen gegebenen Fehlertyp verursacht wird.

11. Verfahren (10) nach Anspruch 10, wobei die Reihenfolge, in der die Menge von Bayes'schen Netzen für Hybridschrittfehler und Einflussnetzen betrieben wird, so konfiguriert ist, dass spätere Netze auf der Grundlage früherer Netze unterdrückt werden können.

12. Verfahren (10) nach Anspruch 10 oder 11, weiter umfassend das Vergleichen der gegebenen extrahierten Anomalie mit mindestens einem Schwellenwert, und wenn die gegebene extrahierte Anomalie den mindestens einen Schwellenwert erreicht, das Senden einer Nachricht, die die Wahrscheinlichkeit eines Fehlers in dem überwachten System identifiziert und meldet.

13. Verfahren (10) nach einem der Ansprüche 10 bis 12, weiter umfassend das Einspeisen der extrahierten Anomalien in ein Bayes'sches Netz für hybride Trendfehler, um eine Häufigkeit eines Fehlers in dem überwachten System zu bestimmen.

**Revendications**

1. Procédé (10) d'identification d'anomalies dans un système surveillé, le procédé comprenant les étapes consistant à :

acquérir des données d'entrée (12) à partir d'une pluralité de capteurs dans le système surveillé ;
prétraiter (14,16) les données acquises pour les préparer à une modélisation, et laisser un premier sous-ensemble de données ;
alimenter (20) le premier sous-ensemble de données dans un modèle de mélange gaussien normal construit en utilisant des conditions de fonctionnement normales du système surveillé, et identifier (22) des données signalées comme anormales par le modèle de mélange gaussien normal, en laissant un deuxième sous-ensemble de données;

comparer (22) le deuxième sous-ensemble de données à au moins un seuil ;

si la comparaison indique que le deuxième sous-ensemble de données contient des anomalies, alimenter (26,28) le deuxième sous-ensemble de données dans au moins un ensemble de modèles de mélange gaussien de performances d'actifs, et identifier les données qui contribuent à une anomalie dans le système surveillé, en laissant un troisième sous-ensemble de données ; et

post-traiter (30) le troisième sous-ensemble de données pour extraire des anomalies dans le système surveillé ;

**caractérisé en ce que** les modèles de mélange gaussien de performances d'actifs comprennent un modèle de mélange gaussien de conditions de fonctionnement construit en utilisant des données affectées par les conditions de fonctionnement du système surveillé, et un modèle de mélange gaussien de conditions de non-fonctionnement construit en utilisant des données non affectées par les conditions de fonctionnement du système surveillé.

2. Procédé (10) selon la revendication 1, dans lequel l'étape de prétraitement comprend la déduction (14) de paramètres à partir des données acquises.

3. Procédé (10) selon l'une quelconque des revendications 1 ou 2, dans lequel l'étape de prétraitement comprend la normalisation (16) des données acquises.

4. Procédé (10) selon la revendication 3, comprenant en outre l'extraction (18) de caractéristiques à partir des données normalisées en soustrayant la médiane des données normalisées sur une fenêtre de données sélectionnée.

5. Procédé (10) selon l'une quelconque des revendications précédentes, dans lequel l'étape de comparaison (22) comprend la détermination que le deuxième sous-ensemble de données comprend ou non des données affectées par une condition de fonctionnement, et si tel est le cas, l'alimentation alors du deuxième sous-ensemble de données dans le modèle de mélange gaussien de conditions de fonctionnement puis l'alimentation du deuxième sous-ensemble de données dans le modèle de mélange gaussien de conditions de non-fonctionnement, et si tel n'est pas le cas, l'alimentation alors du deuxième sous-ensemble de données dans le modèle de mélange gaussien de conditions de non-fonctionnement.

6. Procédé (10) selon l'une quelconque des revendications précédentes, dans lequel l'étape de post-traitement (30) comprend la comparaison du troisième sous-ensemble de données à au moins un seuil.

7. Procédé (10) selon l'une quelconque des revendications précédentes, dans lequel l'étape de post-traitement (30) comprend au moins l'étape consistant à supprimer des valeurs aberrantes ou à lisser (32) le troisième sous-ensemble de données.

8. Procédé (10) selon l'une quelconque des revendications précédentes, comprenant en outre la vérification de capteurs pour les anomalies extraites afin de déterminer si un capteur est une source d'anomalie associée au capteur.

9. Procédé (10) selon l'une quelconque des revendications précédentes, comprenant en outre l'alimentation d'au moins une anomalie extraite à travers un algorithme de détection de pas pour identifier le moment d'un défaut dû à l'au moins une anomalie extraite.

10. Procédé (10) selon l'une quelconque des revendications précédentes, comprenant en outre l'alimentation des anomalies extraites à travers un ensemble de réseaux bayésiens hybrides de défaut de pas et de réseaux d'influence pour classer les anomalies extraites selon le type de défaut, et déterminer les probabilités qu'une anomalie extraite donnée est causé par un type de défaut donné.

11. Procédé (10) selon la revendication 10, dans lequel l'ordre dans lequel l'ensemble des réseaux bayésiens hybrides de défaut de pas et de réseaux d'influence sont mis en oeuvre est configuré de sorte que des réseaux ultérieurs puissent être supprimés sur la base de réseaux antérieurs.

12. Procédé (10) selon l'une quelconque des revendications 10 ou 11, comprenant en outre la comparaison de l'anomalie extraite donnée à au moins un seuil, et si l'anomalie extraite donnée satisfait l'au moins un seuil, l'envoi d'un message identifiant et alertant de la probabilité d'un défaut dans le système surveillé.

13. Procédé (10) selon l'une quelconque des revendications 10 à 12, comprenant en outre l'alimentation des anomalies extraites dans un réseau bayésien hybride de défaut de tendance pour déterminer un taux de défaut dans le système surveillé.

10

```
                                    ┌─────────┐
                                    │   12    │
                                    └────┬────┘
                                         │
                                         ▼
                              ┌────────────────────┐
                              │         14         │
                              └──────────┬─────────┘
                                         │
                                         ▼
                              ┌────────────────────┐
                              │         16         │
                              └──────────┬─────────┘
                                         │
                                         ▼
                              ┌────────────────────┐
                              │         18         │
                              └──────────┬─────────┘
                                         │
                                         ▼
                              ┌────────────────────┐
                              │         20         │
                              └──────────┬─────────┘
                                         │
                                         ▼
                              ┌────────────────────┐
                              │         22         │
                              └──────────┬─────────┘
                                         │
                                         ▼
                                  ╱─────────────╲
                    ┌────────────◄      24       ►
                    │             ╲─────────────╱
                    │                    │
                    │                    ▼
                    │         ┌────────────────────┐
                    │         │         26         │
                    │         └──────────┬─────────┘
                    │                    │
                    └───────────────────►│
                                         ▼
                              ┌────────────────────┐
                              │         28         │
                              └──────────┬─────────┘
                                         │
                                         ▼
                              ┌────────────────────┐
                              │         30         │
                              └──────────┬─────────┘
                                         │
                                         ▼
                              ┌────────────────────┐
                              │         32         │
                              └──────────┬─────────┘
                                         │
                                         ▼
                                    ┌─────────┐
                                    │   34    │
                                    └─────────┘
```

10

FIG. 1

100

```
        ( 110 )
           │
           ▼
       ┌────────┐
       │  112   │
       └────────┘
           │
           ▼
        ◇ 114 ◇──────────────┐
           │                 │
           ▼                 │
       ┌────────┐            │
       │  116   │            │
       └────────┘            │
           │                 │
           ▼                 │
       ┌────────┐            │
       │  118   │            │
       └────────┘            │
           │                 │
           ▼                 │
       ┌────────┐            │
       │  120   │            │
       └────────┘            │
           │                 │
           ▼                 │
       ┌────────┐            │
       │  122   │            │
       └────────┘            │
           │                 │
           ▼                 │
       ┌────────┐            │
       │  124   │            │
       └────────┘            │
           │                 │
           ▼                 │
        ◇ 126 ◇────────┐     │
           │           │     │
           ▼           │     │
       ┌────────┐      │     │
       │  128   │      │     │
       └────────┘      │     │
           │           │     │
           ▼           │     │
       ┌────────┐      │     │
       │  130   │      │     │
       └────────┘      │     │
           │           │     │
           ▼           │     │
       ┌────────┐      │     │
       │  132   │      │     │
       └────────┘      │     │
           │           │     │
           ▼           │     │
       ┌────────┐      │     │
       │  134   │      │     │
       └────────┘      │     │
           │           │     │
           ▼           │     │
       ┌────────┐      │     │
       │  136   │      │     │
       └────────┘      │     │
           │◄──────────┴─────┘
           ▼
        ( 138 )
```

# FIG. 2

**EP 3 105 644 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013116996 A